(19) Europäisches Patentamt
European Patent Office
Office européen des brevets

(11) **EP 3 236 474 B1**

(12) **EUROPEAN PATENT SPECIFICATION**

(45) Date of publication and mention
of the grant of the patent:
**08.07.2020   Bulletin 2020/28**

(51) Int Cl.:
***G21C 9/016*** *(2006.01)*      ***G21C 15/18*** *(2006.01)*

(21) Application number: **15870436.1**

(86) International application number:
**PCT/RU2015/000783**

(22) Date of filing: **16.11.2015**

(87) International publication number:
**WO 2016/099328 (23.06.2016 Gazette 2016/25)**

(54) **CONFINEMENT AND COOLING OF MELT FROM THE CORE OF A NUCLEAR REACTOR**

VERSCHLUSS UND KÜHLUNG EINER SCHMELZE AUS DEM KERN EINES KERNREAKTORS

SYSTÈME DE CONFINEMENT ET DE REFROIDISSEMENT DE LA MASSE EN FUSION DE LA ZONE ACTIVE D'UN RÉACTEUR NUCLÉAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2014   RU 2014150937**

(43) Date of publication of application:
**25.10.2017   Bulletin 2017/43**

(73) Proprietor: **Joint Stock Company "Atomenergoproekt"
Moscow 105005 (RU)**

(72) Inventors:
• **NEDOREZOV, Andrey Borisovich
Podolsk
Moskovskaya obl. 142114 (RU)**

• **SIDOROV, Aleksandr Stalevich
Moscow 115612 (RU)**

(74) Representative: **Friese Goeden Patentanwälte PartGmbB
Widenmayerstraße 49
80538 München (DE)**

(56) References cited:
**CN-A- 1 585 034        GB-A- 2 236 210
RU-C1- 2 063 071       RU-C1- 2 063 071
RU-C1- 2 187 852       RU-U1- 100 326
US-A- 4 280 872        US-A- 4 442 065
US-A- 5 307 390**

## Description

The invention relates to nuclear power industry, namely to systems providing safety of nuclear power plants (NPP), and can be used during severe accidents leading to reactor vessel and its containment failure.

Core meltdown accidents occurring at multiple failures of core cooling systems constitute the highest radiation hazard.

During such accidents, core melt, corium, melts reactor internals and its vessel and flows out of the reactor vessel and, due to its residual heat, can affect the integrity of the NPP containment, the last barrier on the way of radioactive product release to the environment.

To prevent this, the released corium shall be confined and cooled continuously till its complete crystallization. A reactor core melt (corium) cooling and confinement system performs this function, preventing damage to the NPP containment and thus protecting the population and environment from radiation exposure in case of severe accidents in nuclear reactors.

An emergency core-disruptive cooling system for nuclear power reactor is disclosed in RU 2063071, 27.06.1996. The system has concrete cavity filled with water in case of accident. The cavity is provided with manhole and houses reactor vessel and bottom heat insulation placed under it to form, together with bottom, heat-transfer channels joined with uptake channels, central inlet channel, and side inlet channels connected to the latter. All of them, brought together, form circulating loop for cooling down core melt inside reactor vessel. Water is admitted through side inlet channels to central inlet channel wherefrom it is passed to cooling channels for cooling down core melt through reactor vessel bottom; steam-waver mixture produced in the process goes up via uptake channels above cavity water level wherein steam is separated Water goes through manhole downwards to concrete cavity bottom In case of reactor vessel disruption, melt is passed through central inlet channel to middle part of partition made of light-melting material Heat bursts throw water out of side inlet channels and uptake channels. Melt destructs cords wherefrom shut-off valve plugs are suspended. Plugs go down and additional heat bursts crush them through their plugs, whereupon shut-off valves close and remaining water from side inlet channels will be expelled by steam through antishock channels Middle part of partition melts and molten material is discharged to dry trap. Thermal dampers prevent thermal shock on accumulating container components. After intermediate accumulating thermal header is heated above initial temperature of heat pipes, melt heat is imparted to water in uptake section. Heat transfer is afforded by water (steam-water mixture) circulation over the following loop: manhole (downtake section), concrete cavity, clearance, uptake section, uptake pipes (uptake section).

A nuclear reactor molten core catcher is disclosed in RU 2187852, 20.08.2002. The catcher is mounted on supports under vessel of nuclear reactor and is made in the form of a spherical bottom container including a heat-insulating protective layer of zirconia and an outer layer of stainless steel, characterized in that an additional layer of a material chemically binding iron oxides in the melt is arranged on the heat-insulating protective layer. Further, the catcher is characterized in that the additional layer is made of neodymium oxide ($Nd_2O_3$).

An apparatus for positioning and cooling lining layer of damaged LWR nuclear reactor is disclosed in CN1585034, 14.03.2007. The design of the cooling lining layer catcher comprises: steel basket shell arranged in sub-reactor, wherein sacrifice material is filled in the steel basket for diluting the component containing uranium and steel component of the lining layer; the shape (arrangement) of the sacrifice material in reactor core; the choice for optimum number of the sacrifice material; installation of guiding device used for the lining layer flowing into the reactor core trap. The thickness of bottom of the cooling jacket is larger than the thickness of the side wall thereof for no less than 30%, and the cooling jacket inclines to its center for 10 to 20 degree; the diluent and sacrifice material is made into blocks packed in steel shell.

According to the background of the invention, there is a nuclear reactor corium confinement and cooling device located in a concrete cavity under the reactor and containing a water-cooled vessel, pellets with a uranium-bearing oxide corium diluent that are bound by cement mortar and placed in horizontal layers of steel blocks, the bottom of the lower block is identical in shape to the vessel bottom, the blocks above have a center hole, and the assemblies attaching the blocks to each other and to the vessel are located in vertical cut slots of the blocks (see Russian Patent No. 2514419 dated 4/27/2014).

The said analog has several disadvantages:

- the bottom of the lower block identical in shape to the vessel bottom has no central hole while blocks above have it, this results in "jamming" of pellets with diluent in the lower block when the first portion of corium containing mostly melted steel and zirconium enters. Considering that the bottom slope angle is between 10 and 20 degrees, the weight of the "jammed" pellets with diluent constitutes 25 to 35% of the total weight of the pellets in the vessel. Next portions of corium containing mostly uranium and zirconium oxides comes after one to three hours after the first portion and cannot provide conditions for thermal chemical reaction with the pellets in the lower block, as the steel delivered earlier will either solidify in the lower block (thus preventing interaction of the pellets with uranium and zirconium oxides) or destroy the steel structure and fasteners of the lower block (then all pellets located inside will float up and form a slag cap above the corium),

- a formula to determine the weight of uranium-bearing oxide corium diluent does not determine the minimum limit of the required weight of diluent correctly due to the incorrect consideration of correlation between the thickness of layers of oxides and metals from the nuclear reactor. The lower limit under this formula shall be increased by 35% in case pellets are jammed in the lower block, and by 15% more in case pellets are blocked by melted steel in the upper blocks before inversion of the oxide and metal layers starts. Thus, the lower limit for calculation of the diluent weight shall be multiplied by a coefficient of 1.5.

- the maximum weight of the residual water in weight percentage in the cement binder for diluent pellets does not exceed 8%, which does not seem correct. According to the results of experiments (see "Investigation of conditions to provide bonding of sacrificial SFAO ceramic with colored mixture brick mortar". Technical information. Ministry of Science and Education of the Russian Federation, State Educational Institution of Higher Professional Training, St. Petersburg State Technological Institute (technical university), 2013, [1]), effective bonding of the pellets providing the design operability requires that weight fraction of chemically bound water shall be 10%, otherwise integrity of pellet setting and their operability will be compromised. A thesis on decrease of water content in the cement binder in order to decrease hydrogen release is incorrect due to the incorrect consideration of steam interaction with porous structure of the pellets setting.

According to the background of the invention, there is a heat exchanger vessel wall structure designed for corium confinement and cooling devices comprising internal and external walls with granulated ceramic filler material that is chemically similar to the sacrificial material, at least 100 mm thick in between (see Russian Utility Model Patent No. 100326, 12/10/2010).

This vessel structure has the following disadvantages:

- granulated ceramic material does not provide effective protection of the heat exchanger vessel external wall from thermal impact induced by high-temperature melt, as this material is an effective heat insulator with thermal conductivity less than 0.5 W/(m K) on average and practically does not transfer heat to the vessel external wall until the end of the melting process, which increases the risk of heat exchanger destruction during convection washing of granulated material by the core melt,

- granulated ceramic material does not provide reliable chemical protection of the heat exchanger vessel external wall, as in case the heat exchanger internal wall is destroyed, this material can pour out from vertical inter-wall space at discharge rate determined by the destruction area, such process will empty the inter-wall space and leave the external wall without the required chemical and thermal protection, thus increasing the risk of heat exchanger destruction,

- large (at least 100 m) width of the gap between the external and internal walls of the heat exchanger during melting of the granulated ceramic material (containing iron and aluminum oxides) results in significant redistribution of heat flows, the main heat flow passes not through the external wall of the heat exchanger vessel, but through the unprotected free surface of the melt mirror increasing average corium temperature in the heat exchanger, thus causing the following processes: increased aerosol generation, high release of non-condensing gases, increased thermal emission, additional heating and destruction of the equipment located above, and, as a result, corium flowing out of the cooled area leading to destruction of the heat exchanger.

That is why application of granulated ceramic backfills without a strong heat conducting connection with the heat exchanger external wall is ineffective.

The purpose of this invention is to eliminate the deficiencies of similar inventions.

The technical result of the invention involves increased efficiency of heat removal from melt and improved structural reliability.

The said technical result is achieved owing to the fact that the water-cooled water-moderated nuclear reactor core melt cooling and confinement system contains a cone-shaped guide plate installed under the vessel bottom, a cantilever girder installed under the guide plate and supporting the same, a core catcher installed under the cantilever girder and equipped with a cooled cladding in the form of a multi-layer vessel for protection of the external heat-exchange wall from dynamic, thermal and chemical impacts, and filling material for melt dilution inside the multi-layer vessel, wherein the said multi-layer vessel of the catcher contains external and internal metal walls with a filler highly heat-conductive in relation to the wall material in between, where the filler thickness $h_{fil}$ meets the following requirements:

$$1.2h_{ext} < h_{fil} < 2.4h_{ext,}$$

where $h_{ext}$ is the thickness of the vessel external wall.

The above technical result is achieved in specific options of the invention owing to the fact that:

- internal and external walls are made of steel,
- melt temperature of the applied filler of the multi-layer vessel is 300 to 800°C,
- a layer of highly heat-conductive concrete with maximum melt temperature 600°C is used as the material for the filler of the multi-layer vessel,
- strength ribs connected to the external wall but not to the internal wall are located between the internal and external walls, wherein rib thickness $h_{rib}$ meets the following criterion: $0.5h_{ext}< h_{rib}<h_{ext}$,

- top part of the vessel is equipped with the flange, its external diameter coincides with the external diameter of the external wall and the flange internal surface serves as a slide support for the vessel internal wall.

Compared to the analogs, the system under consideration includes a core catcher with a three-layer cladding with external (outer) and internal metal walls and a highly heat-conductive multi-layer vessel filler with a thickness meeting the following criterion:

$$1.2h_{ext}< h_{fil} <2.4h_{ext},$$

The said parameter correlation provides effective heat removal from the corium without impact on the external wall integrity due to the following.

On the one hand, thickness of the highly heat-conductive multi-layer vessel filler shall not be less than $1.2h_{ext}$, as a thinner filler will not induce convective heat crossflows in the molten filler resulting in its overheating and failure to perform the preset functions due to destruction of the internal wall.

On the other hand, thickness of the highly heat-conductive multi-layer vessel filler shall not exceed $2.4h_{ext}$, otherwise the process will be accompanied by a long-term initial filler heating (to its liquefaction) during which overheating and internal wall destruction will occur.

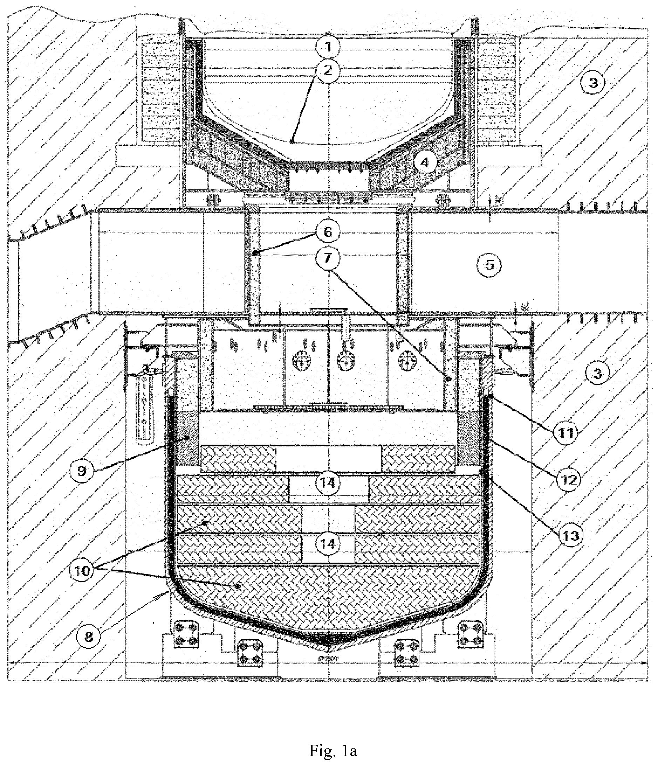

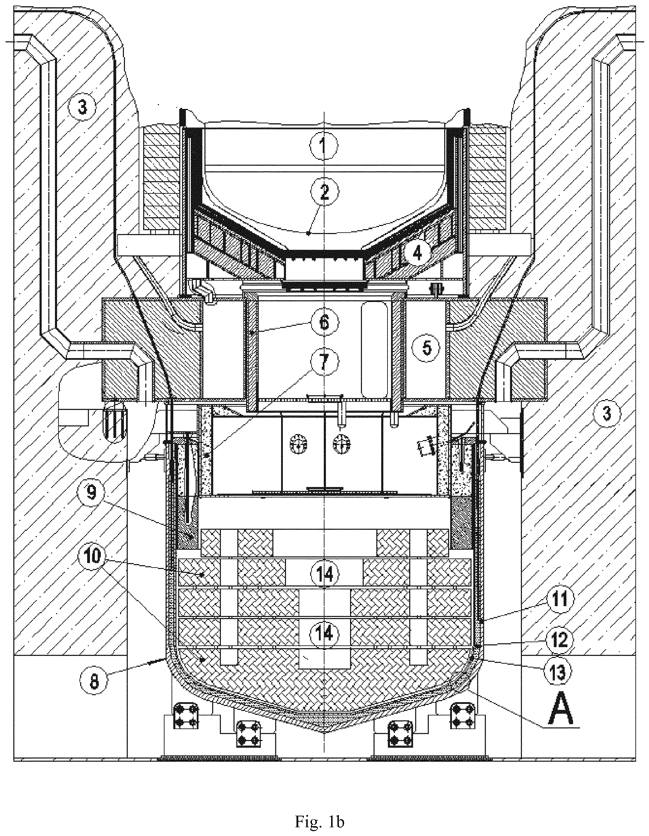

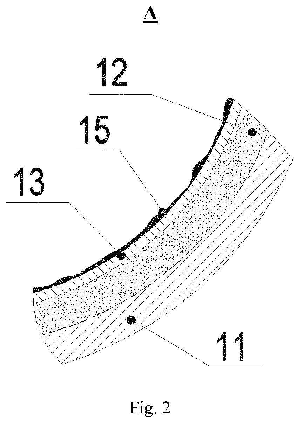

The invention is illustrated with drawings, where: Figures 1 (a, b) show the schematic design of the confinement system, and Figure 2 shows the design of catcher multi-layer vessel.

Designation of structural elements:

1 - reactor vessel,
2 - reactor vessel bottom,
3 - concrete vault (reactor cavity),
4 - guide plate,
5 - cantilever girder,
6 - cantilever girder thermal protection,
7 - operating floor,
8 - core catcher,
9 - thermal protection of multi-layer vessel flange,
10 - filling material,
11 - multi-layer vessel outer layer,
12 - multi-layer vessel filler,
13 - multi-layer vessel inner layer,
14 - graded tapered or cylindrical sump for corium,
15 - slag layer.

According to the claimed invention, a cone-shaped guide plate (4) supported by a cantilever girder (5) with thermal protection (6) is installed under the bottom (2) of the reactor vessel (1) located in a concrete vault (3).

Under the cantilever girder (5), there is a core catcher (8) with a cooled cladding (vessel) in the form of a multi-layer vessel containing an external (11) and an internal (13) metal layers (walls) with a highly heat-conductive multi-layer vessel filler (12) in between.

Inside the core catcher (8), there is a sacrificial filling material (10) applied to dilute corium. In addition, the filling material (10) is equipped with a graded, tapered or cylindrical sump (14) for corium accommodation.

Besides, the core catcher vessel (8) is provided with thermal protection (9) of a multi-layer vessel flange.

An operating floor (7) is located in the space between the cantilever girder (5) and the catcher (8).

The guide plate (4) is designed to guide the corium (core melt) after reactor vessel destruction or melt-through into the catcher (8). In addition, the guide plate (4) prevents large fragments of vessel internals, fuel assemblies and reactor vessel bottom from falling into the catcher and protects the cantilever girder (5) and its communication lines in case of corium from the reactor vessel (1) coming into the catcher (8). The guide plate (4) also protects the concrete vault (3) from direct contact with core melt. The guide plate (4) is divided by strength ribs into sections for core melt flowdown. The strength ribs restrain the reactor vessel bottom (2) with the melt preventing the bottom from covering bores of the guide plate (4) sections and blocking the melt flowdown in case of its destruction or severe plastic deformation. Under the surface of the guide plate cone, there are two layers of concrete: a layer of sacrificial concrete (iron and aluminum oxide base) directly under the surface, and a layer of thermostable heat resistant concrete (aluminum oxide base) under the sacrificial concrete. As the sacrificial concrete is being diluted inn the melt, it increases the clear area in the guide plate sections in case of blocking (when the corium is solidified in one or several sectors), which allows to prevent overheating and destruction of strength ribs, i.e. complete blocking of the clear area and, subsequently, the destruction of the guide plate. Thermostable heat resistant concrete provides structure strength when the sacrificial concrete thickness is decreased. This concrete protects the underlaying equipment from the corium impact preventing the latter from melting or destructing the guide plate (4).

The cantilever girder (5) protects not only the catcher (8), but also the internal communication lines of the whole corium confinement and cooling system from destruction by corium and serves as a support for the guide plate (4) that transfers statistical and dynamic impacts to the cantilever girder (5) fastened in the reactor vessel (3). The cantilever girder (5) also ensures operability of the guide plate (4) in case of its sectional destruction when bearing capacity of the ribs is compromised.

The cantilever girder (5) comprises:

- cover pipes connecting instrumentation and control (I&C) sensors,

- corium spray lines (a header with distribution pipelines) connecting the cooling water supply from external sources, the cooling water is supplied by the spray lines to be sprayed on the corium from the cantilever girder above,
- steam removal lines removing steam from the concrete vault (3) under the reactor to the pressurized area when the corium is cooled in the core catcher (8), the lines remove saturated steam without exceeding the allowable pressure in the concrete vault (3),
- air supply lines supplying air for guide plate (4) cooling during normal operation.

The catcher (8) confines and cools the core melt under the reactor in the reactor cavity (3) in case of reactor vessel (1) melt-through or destruction by means of an evolved heat-exchange surface and heat transfer to large volumes of boiling water. The catcher (8) is installed in the reactor cavity (3) foundation on embedded parts.

According to the claimed invention, the catcher (8) cladding is a multi-layer vessel that comprises:

- an external metal layer (11): external cladding formed by the wall and the bottom,
- layer of a filler (12) of a material that is highly heat-conductive in relation to the wall material, i.e. a material with a higher heat transfer than that of the wall material,
- an internal metal layer (13): internal cladding formed by the wall and the bottom.

The external layer (11) can be made of steel, such as grade 22K, 20K, with wall thickness 10 to 70 mm and bottom thickness 70 to 120 mm.

The internal layer (13) can be made of steel, such as grade 22K, 20K 09G2S, with wall thickness 15 to 40 mm and bottom thickness 20 to 40 mm.

The layer of the filler (12) is made of a material with melt temperature 300 to 800°C, preferably low-melt concrete with maximum melt temperature 600°C.

Filler thickness (12) $h_{fil}$ shall meet the following criterion: $1.2h_{ext} < h_{fil} < 2.4h_{ext}$, where $h_{ext}$ is vessel external wall thickness. The lower value assumed for internal wall thickness less than $0.5h_{ext}$, and the higher one otherwise.

In particular, thickness of the layer of the filler (12) can be $h_{ext}$ = 70-150 mm.

The top part of the catcher multi-layer vessel (8) is equipped with the flange, its external diameter coincides with the external diameter of the external wall and the flange internal surface serves as a slide support for the vessel internal wall.

The internal layer of the catcher (8) multi-layer vessel (13) can additionally contain a slag layer (15) located on the inside surface of the multi-layer vessel (13) internal layer. The slag layer (15) can be both pre-formed or formed in the process of corium cooling. Depending on the heat exchange and thermo-chemical conditions, the layer thickness varies from 0.1 to 5 mm during the initial stage of corium cooling, then, as the corium is cooled down, the slag crust thickness can increase significantly. The slag layer composition is based on at least one of the following oxides: zirconium oxide, aluminum oxide, iron oxide, provided that the minimum base content of the layer is 20 weight %.

Besides, the catcher (8) multi-layer vessel can have additional strength ribs (not shown on the drawings) located between the external and internal walls. The ribs are jointed physically connected with the external wall, but are not with the internal one.

Bearing rib thickness $h_{rib}$ shall meet the following criterion: $0.5h_{ext} < h_{rib} < h_{ext}$, wherein the lower value assumed for internal wall thickness less than $0.5h_{ext}$, and the higher one otherwise.

The lower value cannot be less than $0.5h_{ext}$ due to thermo-mechanical instability of the ribs (severe structure deformation occurs at dynamic impacts even with the filler),

- the higher value cannot exceed $h_{ext}$ due to failure of heat removal from the multi-layer vessel external layer (11): the heat-exchange surface is overheated and melt-through.

Bearing ribs can pass through the internal layer of the multi-layer vessel (13) into the internal cavity of the catcher (8) forming a protective frame.

**Example of a multi-layer vessel design:**

- diameter: 6 m,
- external layer (11): 22K steel wall, 60 mm thick, 25K steel bottom, 90 mm thick,
- internal layer (13): 22K steel wall, 30 mm thick, 22K steel bottom, 30 mm thick,
- filler layer (12): low-melt concrete with melt temperature about 600°C,
- slag layer: a mixture of iron, aluminum and zirconium oxides, 0.5 mm thick,
- bearing ribs: 22K steel, 40 mm thick.

The filling material (10) provides volumetric distribution of corium within the core catcher (8). Is designed for corium oxidization and dissolution to reduce the volumetric energy release and increase the heat-exchange surface between the energy-emitting corium and the multi-layer vessel external layer (11), as well contributing to creation of conditions for fuel-containing corium fractions to float above the steel layer. The filling material (10) can be made of steel and oxide components containing iron, aluminum and zirconium oxides, with channels for corium distribution not only in the cylinder part, but in bottom cone cavity as well.

The operating floor (7) provides heat protection of the catcher (8) top part allowing to perform visual inspection of the reactor vessel (1) during scheduled preventive maintenance by providing access to:

- the filling material (10) for revision and water removal in case of leakage accidents,
- the pressurized assemblies protecting the filling material (10) from leakage accidents,
- the I&C sensor cover pipe end fittings for repairs or sensor replacement.

The claimed system operates as follows:

At the time of vessel (1) destruction, the core melt impacted by hydrostatic and excessive pressures starts to move to the guide plate (4) surface supported by the cantilever girder (5).

As the core flows down through the guide plate (4) sections, it goes inside the multi-layer vessel of the catcher (8) and contacts with the filling material (10).

In case of sectional asymmetric corium flow-down, thermal protections (6) of the cantilever girder (5) and operating floor (7) are starting to melt. Being destroyed, the thermal protections decrease heat impact of the corium on the protected equipment while decreasing temperature and chemical reactivity of the corium itself.

First, the corium fills the sump (14), then, as the other steel structure components of the filling material (10) are melted, it fills the voids between the non-metal components of the filling material (10). The nonmetallic components of the filler (10) are interconnected with special cement that provides baking of these nonmetallic components together into a structure preventing the filler (10) components from floating up in the heavier core melt. As the nonmetallic components are baked together, the setting has a sufficient strength when the steel fasteners of the filling material (10) lose their strength. Thus, decrease of the steel component strength of the filling material (10) during temperature increase is compensated by increase of the setting nonmetallic component strength of the filling material (10) during baking. After the steel components of the filler (10) are melted and dissolved, surface interaction of the filling material (10) nonmetallic components with core melt components is started. The filling material design, physical and chemical properties are selected to provide maximum efficiency of filler dissolution in the core melt, prevent corium temperature increase, decrease aerosol generation and radiative heat transfer from the melt mirror, decrease generation of hydrogen and other non-condensing gases. One of the filling material components is ferric oxide with various oxidation degrees which oxidates zirconium, fully oxidates uranium and plutonium dioxides in the course of its interaction with core melt, thus preventing their metal phase, and ensures full oxidation of other corium components, which allows to prevent water steam radiolysis and to block oxygen sorption from the atmosphere over the melt mirror surface. This further leads to a significant reduction of hydrogen emission. Ferric oxide releases oxygen during this process and can deoxidize up to metallic iron inclusive.

The core melt is discharged into the filling material (10) in two stages: at the first stage, mainly melted steel and zirconium with a mixture of oxides from the reactor vessel (1) are flowing to the filling material (10), at the second stage, the main components of the core melt flowing to the filler are liquid hard-melting oxides with a mixture of metals. Considering this, there are two different types of interaction between the core melt and the filling material (10): 1) metal components of the core melt interact with the filling material components and melt them, as fluid metal zirconium from the core melt is oxidized in the course of boundary interaction with the nonmetallic filling material components that float up after melting and form a layer of light iron and zirconium oxides above the layer of molten metals, 2) oxide components of the core melt interact both with metal structures and nonmetallic filling material components, melt and dissolve them, while zirconium, chrome and some other molten metals included in the oxide fraction of the core melt are oxidized during interaction with the nonmetallic filling material components. Such complicated multistage interaction results in further oxidization of the melt oxide fraction and oxidation of the most active components of the melt metal fraction, generation of corium with preset properties that allow to confine it in a restricted volume and perform its safe and efficient long-term cooling.

Interaction of corium with the filling material (10) results in decrease of the generated corium temperature approximately 1.5 to 2 times, which allows to lower the radiative heat flow from the melt mirror to the cantilever girder, guide plate and reactor vessel bottom above the latter significantly. In order to decrease radiative heat flows from the melt mirror and aerosol generation more effectively, both natural and artificial slag caps are used that are formed both during melting of special-purpose concretes under heat emission from the melt mirror and during fluid corium melt interaction with the filling material. The thickness and life time of the slag cap are selected to minimize the melt mirror impact on the above located equipment in the worst case initial period of corium confinement: during its entry into the filling material (10) and accumulation in core catcher vessel. The time of core melt entry into the core catcher vessel can reach up to several hours, while the oxide phase entry is significantly uneven and can be followed by a considerable change or temporary termination of the flow.

Chemical reactions of the filling material (10) and the core melt gradually change corium composition and structure. At the initial stage, the core melt can change from homogeneous into double-layer structure: generally mixture of molten steel and zirconium on the top with melt of high-melting oxides mixed with metals in the bottom, high-melting oxide melt density is on average 25% higher than the density of molten metal mixture.

Gradually, as the filling material is being dissolved in the core melt fluid oxides, the corium composition, particularly its oxide fraction, is changed: the fluid oxide density decrease is more intensive than the change of density of molten metals. This process leads to continuous decrease of density difference between fluid metal and oxide fractions of the corium. The initial weight of nonmetallic sacrificial materials in the filling material is selected so as to guarantee dissolution of nonmetallic sacrificial materials in the core fluid high-melting oxides in such amount that the resultant density of the new oxide melt would be less than the density of the corium molten metal fraction. When fluid oxide density becomes less than the molten metal density, inversion occurs in the corium molten pool: fluid oxides float up, and the corium molten metal fraction goes down. The new corium structure allows to perform safe water cooling of the melt mirror. When fluid oxides come to the surface, cooling water does not create risk of steam explosions due to thermal physical properties of fluid oxides, and does not enter into hydrogen-generating chemical reactions, is not subject to thermal decomposition owing to a relatively low melt mirror temperature. Inversion of fluid oxides and metals allows to provide a steadier heat flow through the core catcher vessel to the ultimate heat sink, water, which is caused by various thermal physical properties of fluid oxides and molten metals.

Heat is transfered from the corium to the catcher (8) in three stages. At the first stage, when mainly molten metals flow into the sump (14) of the filling material (10), heat exchange between the catcher (8) multi-layer vessel (11-13) layers and the melt is not particularly intensive: the heat accumulated by the melt is spent primarily on heating and partial melting of filling material (10) structural components. The catcher (8) lower part is heated evenly and has no significant features. Considering that the catcher (8) cone bottom is on average 30% thicker than its cylindrical part, and vertical convective heat transfer from top downwards is considerably less effective than radial convective heat transfer or vertical convective heat transfer from bottom upwards, the catcher (8) bottom heating process is significantly slower than the subsequent heating of its cylindrical part.

At the second stage, when fluid high-melting oxides dominate, the corium melt level increases significantly (considering dissolution of sacrificial filling materials). The corium oxide fraction is energy-emitting. Energy emission is distributed between the oxide and metal corium fractions in proportion of approximately 9 to 1, which leads the considerable heat flows from the corium oxide fraction. As the density of the corium oxide fraction at the initial stage of interaction with the filling material is significantly higher than the density of molten metal, stratification and redistribution corium components becomes possible: molten metals on the top and high-melting oxides in the bottom. In this condition, when the catcher (8) bottom is not hearted significantly by high-melting oxides because convective heat transfer is directed from top downwards, and heat conductivity of the oxide crust on the "vessel wall/oxides" boundary is insignificant and, on average, does not exceed 1 W/(m K). The oxide crust consisting of molten high-melting oxides (slag line) is formed as a result of oxide melt cooling on the "oxides/metal" boundary, as the metal has a times higher heat conductivity than the oxides and can provide better heat transfer to the ultimate heat sink, water. This effect is used for reliable corium confinement that allows to prevent chemical interaction of the corium components with the external layer of the water-cooled multi-layer vessel (11) and provide its thermal protection. The molten metals above fluid oxides receive energy generally due to convective heat transfer with fluid oxides, the heat transfer direction is from bottom upwards. This condition can lead to overheating of the corium molten metal fraction and significantly uneven distribution of heat flows through the multi-layer vessel layers (11-13) of the catcher (8) to the ultimate heat sink, while increasing heat flow density by radiation from the melt mirror. No slag line or natural barrier protecting the multi-layer vessel from overheating is formed in the area of interaction between the catcher (8) multi-layer vessel (11-13) and the corium molten metal fraction. The task at hand is solved by design provisions.

At the third stage, the corium interacts with the filling material (10) as it comes out on the internal layer of the multi-layer vessel (13). By that time the external layer of the multi-layer vessel (11) on the reactor cavity (3) side is filled with water. The core catcher (8) is installed in the reactor cavity (3) and is connected with the sump collecting reactor plant primary circuit coolant during design and beyond-design basis accidents, and water supplied to the primary circuit from safety systems. To prevent failure of the external layer of the multi-layer vessel (11) transferring heat by high-temperature corium melt, the core catcher (8) is designed as a multi-layer vessel described above. In this case it is possible to distribute thermal and mechanical loads between the layers (11-13) of the multi-layer vessel: the main thermal loads are taken up by the internal layer (13), and the main mechanical loads (impact and pressure) are taken up by the external layer (11). Transfer of mechanical loads from the internal layer (13) to the external layer (11) is guaranteed by the ribs installed on the internal surface of the external layer (11) and serving as slide supports for the internal layer (13). With such structural design, the internal layer (13) transfers efforts from the mechanical loads and thermal deformations to the cooled external layer (11) through the ribs and can move during thermal expansion regardless of the external layer. To minimize thermal stresses from the filler (12) and the internal layer (13), the ribs and the external layer (11) are connected with the use of thermal damping.

The multi-layer vessel filler (12) of a highly heat-conductive material (low-melting concrete) between the internal (13) and the external (11) layers of the vessel provides heat transfer from the vessel internal layer to the external one. The internal layer (13) is heated by the corium and the heat is transferred to the filler (12) (low-melting concrete). First, during heat conduction, the filler is heated up to the melting temperature, then, as the melted area width is increasing, convective heat transfer between the internal layer (13) and the not-melted filler (12) is started. This process is continued until the filler (12) is melted completely with heat flow release from the internal layer to the external one. The process of filler (12) melting is rather fast due high heat conductivity of the material, therefore, practically all heat flow from the internal layer will be absorbed by the filler material. For this purpose, the filler thickness is selected to meet the following main two criteria: 1) concrete melting time shall be significantly shorter than the time of the internal layer critical heating leading to strength loss, 2) such level of convective heat transfer shall be provided between the internal and external layers that the heat flow density transferred from the internal layer to the molten concrete is decreased 1.5 to 2 times during transfer from the molten concrete to the external layer (external wall) due to convective heat-mass transfer in the molten concrete. The first main criterion is met due to structural design: selection of filling material (10) macro-porosity to provide moderate heat flow to the vessel internal layer at the initial stage of corium interaction with the filler allowing to melt the filler without strength loss of the vessel internal layer during its temperature increase. Such macro-porosity allows to exclude impact of the whole corium on the vessel internal layer internal surface by limiting this impact approximately to one tenth of the total energy release from residual energy release and chemical reactions with the filling material (10) components in the corium during a restricted time period at the initial stage of interaction. At the final stage of core melt interaction with the filling material (10), the vessel internal layer is heated up to the design temperature, and fluid low-melting concrete provides convective heat transfer to the vessel external layer and further to the ultimate heat sink (water) in area of thermal contact of the corium and the vessel internal layer. The second main criterion is met due to the properties of fluid low-melting concrete and parameters of the space between the vessel layers, wherein convective heat-mass transfer guarantees the preset decrease of heat flow density during its transfer from the internal layer to the external one.

Density limitation of the heat current passing through the external layer (11) of the multi-layer vessel is required to ensure a stable and acritical heat transfer to the ultimate heat sink, i.e. circumambient water of the core catcher (8). Heat is transferred to water in the "pool boiling" mode, which provides for the possibility of passive heat removal for an unlimited period of time. The function of heat current restriction is fulfilled by two components of the nuclear reactor core melt cooling and confinement system.

The first component is the filling material (10), which, on the one hand, provides for dilution and volume increase of heat-producing part of the corium thus allowing to increase the heat exchange area while reducing density of the heat current through the external layer (11) of the core catcher (8), and, on the other hand, provides for inversion of the oxide and metal parts of the corium with the oxide part moving upwards and liquid metal part moving downwards while reducing maximum heat currents to the external layer (11) by redistributing heat currents in the lower part of the core catcher (8). The second component is the multi-layer vessel filler (12) of the multi-layer vessel, which provides for reduction (flattening) of maximum heat currents at the external layer (11) by convective heat transfer that ensures redistribution of maximum heat currents from the corium by height of the external layer (11) of the core catcher (8).

Steam produced on the external layer (11) surface goes up and flows through steam relief channels to the containment where it is then condensed. The condensate flows from the containment to the sump connected by flow passages with the reactor cavity (3) where the core catcher (8) is installed. Therefore, in case of long-term cooling of the core catcher cooling water circulation and constant heat removal from the external layer (11) are ensured. Corium in the catcher (8) gradually cools down as the stored heat and the heat of residual energy emissions decrease. At the initial stage of melt cooling after the interaction with filling material (10) is completed, the main heat exchange is carried out through the external layer of the multi-layer vessel (11). After water is supplied to the catcher (8), heat flows are gradually balanced: the heat flow through the external layer (11) becomes equal to the heat flow from the corium surface. At the final stage the corium may be cooled down directly by water supplied into the core catcher (8), which is possible if corium forms a water-permeable structure during its solidification.

Thus, the said catcher (8) of the water-cooled water-moderated nuclear reactor core melt cooling and confinement system, as a whole, allows to increase the efficiency of heat removal from the melt while maintaining the integrity of the external layer of the multi-layer vessel (11).

## Claims

1. Water-cooled water-moderated nuclear reactor core melt cooling and confinement system containing:

   a cone-shaped guide plate (4) being adapted to be installed under a reactor vessel bottom (2), a cantilever girder (5) installed under the guide plate (4) and supporting the same, a core catcher (8) installed under the cantilever girder (5) and equipped with cooled cladding in form of a multi-layer vessel for protection of the external heat-exchange wall from dynamic, thermal and chemical impacts,

and a filling material (10) for melt dilution inside the multi-layer vessel,
wherein the multi-layer vessel has external (11) and internal (13) metal walls with a filler (12) in between that is highly heat-conductive in relation to wall material, where thickness $h_{fil}$ of the filler (12) meets the following criterion:

$$1.2h_{ext} < h_{fil} < 2.4h_{ext},$$

where $h_{ext}$ is the thickness of the vessel external wall (11).

2. A system according to claim 1, wherein the internal (13) and external (11) walls are made of steel.

3. A system according to claim 1, wherein the filler (12) with 300 to 800 °C fusion point is used.

4. A system according to claim 1, wherein the layer of highly heat-conductive concrete with maximum melt temperature 600°C is used as material for the filler (12).

5. A system according to claim 1, wherein strength ribs connected to the external wall (11) but not to the internal wall (13) are located between the internal (13) and external (11) walls, wherein rib thickness $h_{rib}$ meets the following criterion:

$$0.5h_{ext} < h_{rib} < h_{ext}$$

6. A system according to claim 1, wherein top part of the multi-layer vessel is equipped with the flange, its external diameter coincides with the external diameter of the external wall (11) and the flange internal surface serves as a slide support for the vessel internal wall (13).

7. A system according to claim 1, wherein it additionally contains an artificial slag layer located on the inside surface of the multi-layer vessel internal wall (13), where the slag layer composition is based on at least one of the following oxides: zirconium oxide, aluminum oxide, iron oxide, provided that the minimum content of base in the layer is 15 weight %.

**Patentansprüche**

1. Wassergekühltes, wassermoderiertes Kernreaktor-Kernschmelzekühl- und -eindämmungssystem, enthaltend:

eine kegelförmige Führungsplatte (4), die zum Einbau unter einem Reaktorbehälterboden (2) geeignet ist,
einen Kragträger (5), der unter der Führungsplatte (4) installiert ist und diese trägt,
einen Kernfänger (8), der unter dem Kragträger (5) installiert und mit einer gekühlten Verkleidung in Form eines mehrschichtigen Behälters ausgestattet ist, und zwar zum Schutz der äußeren Wärmetauscherwand vor dynamischen, thermischen und chemischen Einflüssen,
und ein Füllmaterial (10) zur Schmelzeverdünnung im Inneren des mehrschichtigen Behälters,
wobei der mehrschichtige Behälter äußere (11) und innere (13) Metallwände mit einem Füllstoff (12) dazwischen aufweist, der im Verhältnis zum Wandmaterial hochwörmeleitend ist, wobei die Dicke $h_{fil}$ des Füllstoffs (12) das folgende Kriterium erfüllt:

$$1,2h_{ext} < h_{fil} < 2,4h_{ext},$$

worin $h_{ext}$ die Dicke der äußeren Behälterwand (11) ist.

2. System nach Anspruch 1, wobei die inneren (13) und äußeren Wände (11) aus Stahl bestehen.

3. System nach Anspruch 1, wobei ein Füllstoff (12) mit einem Schmelzpunkt von 300 bis 800°C verwendet wird.

4. System nach Anspruch 1, wobei eine Schicht aus hochwörmeleitföhigem Beton mit einer maximalen Schmelztemperatur von 600°C als Material für den Füllstoff (12) verwendet wird.

5. System nach Anspruch 1, wobei Festigkeitsrippen, die mit der äußeren Wand (11) nicht aber mit der inneren Wand (13) verbunden sind, zwischen den inneren (13) und äußeren (11) Wänden angeordnet sind, wobei die Rippenstärke $h_{rib}$ das folgende Kriterium erfüllt: $0,5h_{ext} < h_{rib} < h_{ext}$.

6. System nach Anspruch 1, wobei der obere Teil des mehrschichtigen Behälters mit dem Flansch ausgestattet ist, sein Außendurchmesser mit dem Außendurchmesser der äußeren Wand (11) übereinstimmt und die Flanschinnenfläche als Gleitstütze für die innere Behälterwand (13) dient.

7. System nach Anspruch 1, wobei es zusätzlich eine künstliche Schlackenschicht enthält, die sich auf der Innenfläche der mehrschichtigen inneren Behälterwand (13) befindet, wobei die Schlackenschichtzusammensetzung auf mindestens einem der folgenden Oxide basiert: Zirkoniumoxid, Aluminiumoxid, Eisenoxid, mit der Maßgabe, dass der Mindestgehalt der Basis in der Schicht 15 Gew.-% beträgt.

## Revendications

1. Système de refroidissement et de confinement d'un cœur de réacteur nucléaire refroidi à l'eau et modéré à l'eau contenant :

   une plaque de guidage conique (4) adaptée à être installée sous un fond de cuve de réacteur (2),
   une poutre en porte-à-faux (5) installée sous la plaque de guidage (4) et supportant celle-ci,
   un récupérateur de cœur (8) installé sous la poutre en porte-à-faux (5) et équipé d'un revêtement refroidi sous la forme d'une cuve multicouche pour protéger la paroi externe d'échange thermique contre les impacts dynamiques, thermiques et chimiques,
   et un matériau de remplissage (10) pour la dilution de la fusion à l'intérieur de la cuve multicouche,
   dans lequel la cuve multicouche présente des parois métalliques externe (11) et interne (13) avec une charge (12) entre les deux, qui est hautement thermoconductrice par rapport au matériau des parois, l'épaisseur $h_{fil}$ de la charge (12) répondant au critère suivant :

   $$1,2\ h_{ext} < h_{fil} < 2,4\ h_{ext},$$

   où $h_{ext}$ est l'épaisseur de la paroi externe de cuve (11).

2. Système selon la revendication 1, dans lequel les parois interne (13) et externe (11) sont en acier.

3. Système selon la revendication 1, dans lequel on utilise une charge (12) ayant un point de fusion de 300 à 800 °C.

4. Système selon la revendication 1, dans lequel on utilise une couche en béton hautement thermoconducteur ayant une température de fusion maximale de 600 °C comme matériau pour la charge (12).

5. Système selon la revendication 1, dans lequel des nervures de renfort reliées à la paroi externe (11) mais pas à la paroi interne (13) sont situées entre les parois interne (13) et externe (11), l'épaisseur de nervure $h_{rib}$ répondant au critère suivant :

$$0,5\ h_{ext} < h_{rib} < h_{ext}$$

6. Système selon la revendication 1, dans lequel la partie supérieure de la cuve multicouche est équipée de la bride, son diamètre extérieur coïncide avec le diamètre externe de la paroi externe (11) et la surface interne de bride sert de support de glissement pour la paroi interne de cuve (13).

7. Système selon la revendication 1, lequel contient en outre une couche de scories artificielles située sur la surface intérieure de la paroi interne (13) de la cuve multicouche, la composition de la couche de scories étant basée sur au moins un des oxydes suivants : oxyde de zirconium, oxyde d'aluminium, oxyde de fer, à condition que le contenu minimal de la base dans la couche soit de 15 % en poids.

Fig. 1a

Fig. 1b

<u>**A**</u>

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2063071
- RU 2187852
- CN 1585034
- RU 2514419
- RU 100326

### Non-patent literature cited in the description

- Investigation of conditions to provide bonding of sacrificial SFAO ceramic with colored mixture brick mortar. Technical information. Ministry of Science and Education of the Russian Federation. State Educational Institution of Higher Professional Training, 2013